# EUROPÄISCHE PATENTSCHRIFT

(11) **EP 1 486 473 B1**
(45) Veröffentlichungstag und Bekanntmachung des Hinweises auf die Patenterteilung: **05.09.2007**
(21) Anmeldenummer: 03013335.9
(22) Anmeldetag: 13.06.2003
(51) Int. Cl.: C04B 35/66, B22C 3/00

(54) **Dauerhafte Bornitrid-Formtrennschichten für das Druckgiessen von Nichteisenmetallen**
Durable mould release coatings for die casting of nonferrous metals comprising boron nitride
Couche de démoulage durable de nitrure de bore pour la moulage par injection

(43) Veröffentlichungstag der Anmeldung: 15.12.2004
(73) Patentinhaber: ESK Ceramics GmbH & Co.KG, 87437 Kempten (DE); ItN Nanovation AG, 66117 Saarbrücken (DE)
(72) Erfinder: Schwetz, Karl, Dr., 87477 Sulzberg (DE); Engler, Martin, Dr., 87439 Kempten (DE); Schmidt, Helmut, Prof. Dr., 66130 Saarbrücken (DE); Aslan, Mesut, Dr., 66989 Höheischweiler (DE); Reinhard, Bernd, Dr., 66663 Merzig-Brotdorf (DE); Endres, Klaus, Dr., 66450 Sulzbach (DE); Nair, Hareesh, Dr., 66125 Saarbrücken (DE); Drumm, Robert, Dipl.-Ing., 66113 Saarbrücken (DE); Matje, Peter, Dr., 87487 Wiggensbach (DE); Nonninger, Ralph, Dr., 66129 Saarbrücken (DE); Binkle, Olaf, Dr., 66459 Kirkel (DE)
(74) Vertreter: TER MEER - STEINMEISTER & PARTNER GbR

(56) Entgegenhaltungen:
- DE-A- 19 714 949
- DE-A1- 3 030 991
- DE-A1- 10 127 494
- DE-A1- 19 647 368
- FR-A1- 2 291 809
- JP-A- 3 038 254
- JP-A- 5 051 238
- US-B1- 6 291 407
- DATABASE CA [Online] CHEMICAL ABSTRACTS SERVICE, COLUMBUS, OHIO, US; OOSAKI, YASUKO ET AL: "Mold release slurry containing boron nitride and silica colloid for dental materials" retrieved from STN Database accession no. 125:67880 XP002263862 & JP 08 104535 A (ASAHI GLASS CO LTD, JAPAN) 23. April 1996 (1996-04-23)
- DATABASE WPI Section Ch, Week 198247 Derwent Publications Ltd., London, GB; Class A81, AN 1982-01201J XP002263863 & JP 57 168745 A (HITACHI FUNMATSU YAKIN KK), 18. Oktober 1982 (1982-10-18)
- PATENT ABSTRACTS OF JAPAN vol. 1996, no. 11, 29. November 1996 (1996-11-29) & JP 08 183906 A (SHIN ETSU CHEM CO LTD), 16. Juli 1996 (1996-07-16)

## Beschreibung

Die Erfindung betrifft korrosionsbeständige, temperaturstabile, dauerhafte, für den Druckguss von Nichteisenmetallen geeignete Formtrennschichten enthaltend Bornitrid sowie Schlichten zur deren Herstellung, ein Verfahren zur Herstellung der Schlichten, ein Verfahren zur Herstellung der Formtrennschichten und die Verwendung der Formtrennschichten.

Bornitrid ist ein seit langem bekannter Werkstoff, der von seiner Kristallstruktur her ähnlich aufgebaut ist wie Graphit. Wie Graphit weist er gegenüber vielen Substanzen, wie beispielsweise silikatischen Schmelzen oder auch Metallschmelzen, eine geringe Benetzbarkeit auf. Daher gibt es viele Untersuchungen zu nicht anhaftenden Schichten auf der Basis von Bornitrid, um diese für Gießprozesse zu nutzen. Das Problem bei dieser Nutzung ist es jedoch, dass es nicht gelingt, Bornitrid in Substanz auf Formen, insbesondere komplexerer Natur, dauerhaft aufzutragen. Ein Aufsintern von Bornitrid verbietet dessen hohe Sintertemperatur. Zudem ist es erforderlich, diese Schichten sehr dicht aufzutragen, damit Schmelzen nicht in Poren eindringen können, was zu einer erhöhten Anhaftung führen würde. Es wurde daher vielfach versucht, Bindemittel auf anorganischer Basis heranzuziehen, in die Bornitrid eingebunden ist. Um die beispielsweise beim Metallguss auftretenden Temperaturen zu überstehen, müssen diese Bindemittel praktisch rein anorganisch sein, da organische Bindemittel zersetzt oder pyrolisiert werden. Nachteil dieser anorganischen Bindemittel ist, wenn sie dichte Filme bilden, dass sie die Bornitridpartikel überziehen können und damit die Antihaftkraft des Bornitrids reduzieren bzw. völlig verhindern. Dies ist kaum zu vermeiden, da die Binder nach dem Stand der Technik, wie beispielsweise Aluminiumphosphate, andere Phosphate oder Silikate, zu ihrer Verdichtung eine Art Schmelzfluss benötigen, der die Antihaftwirkung des Bornitrids drastisch reduziert und die Binder somit dem flüssigen Metall reagieren können , was zu einer Anhaftung des Gusskörpers auf der Trennschicht führen kann.

Komplexe, dünnwandige Bauteile aus Nichteisenmetallen (Aluminium, Zink, Messing, Magnesium) werden heute meist mit Druckgussverfahren hergestellt. Dabei werden Metallschmelzen durch die Anwendung von Druck in die meist mehrteiligen Formen gepresst. Diese Formteile sind dabei meist aus hochfestem Stahl gefertigt.

Die Forminnenseiten, die mit den teilerschmolzenen (Semi-solid oder Thixoforming) bzw. geschmolzenen Metallen in Berührung kommen, müssen mit Trennschichten versehen werden, um eine Korrosion der Formenwandung durch das flüssige Metall zu verhindern, eine leichte Entformung durch Gleit- und Schmierwirkung zu erzielen, eine Adhäsion der Gusskörper ("Kleben" / Verschweißen) durch Barrierebildung zu verhindern und eine Unterstützung des Metallflusses durch Verlängerung der Fließwege zu gewährleisten.

Wichtige Anforderung an die Trennmittel sind, dass keine festen Rückstände bzw. feste Crackprodukte auf der Formenoberfläche der Werkstückoberfläche oder im Gussstück hinterlassen werden, dass sie nicht zu einer weiteren Erhöhung des Gasgehaltes (gasförmige Crackprodukte) im Gusskörper führen, dass die freiwerdenden Crackprodukte keine gefährlichen oder toxischen Substanzen enthalten und dass sie zu keiner negativen Beeinflussung der Oberflächeneigenschaften und mechanischen Eigenschaften der Gusskörper führen.

Die heutigen Formtrennmittel werden in zwei große Gruppen unterteilt, zum einen flüssige Formtrennmittel in Form von wässrigen bzw. wasserlöslichen oder organischen (nicht wasserlöslichen) Trennmitteln und zum anderen die Gruppe der pulverförmigen agglomerierten Trockentrennmittel. Als organische Trennmittel werden Silikonöle, unpolare Polyolefine, Fette, synthetische oder natürliche, wie beispielsweise mineralische, pflanzliche oder tierische, Öle oder Wachse, Karbonsäuren, organische Metallsalze, Fettsäureester u.v.a.m. verwendet.

Für den Feinguss von Eisen oder Stählen wird beispielsweise ZrO₂ bzw. ein Gemisch von ZrO₂ mit Al₂O₃ als Trennmittel in Kombination mit Alkalisilikaten eingesetzt. Die bisher auf dem Markt erhältlichen kommerziellen Trennschichtsysteme mit anorganischen Trennmitteln enthalten in nahezu allen Fällen hexagonales Bornitrid (BN), MoS₂ oder Graphit als anorganische Trennmittel in Kombination mit Al₂O₃, Alkali- und Erdalkalisilikaten sowie in einigen Fällen auch Tonen, wie beispielsweise in US 5,026,422 oder US 5,007,962 beschrieben. Neben den organischen Trennmitteln finden beim Druckguss auch anorganische Trennmittel wie Graphit, Bornitrid, Glimmer, Talk, Molybdändisulfid, Molybdändiselenid, seltene Erdfluoride etc. Verwendung, wie beispielsweise in US 2001/0031707 A1, US 3,830,280 oder US 5,076,339 beschrieben.

In JP 57168745 wird ein Formtrennmittel für dass Gießen von Aluminium in metallischen Gießformen beansprucht, welches gute Filmbildungs- sowie gute Korrosionseigenschaften gegenüber flüssigem Aluminium besitzen soll. Die Zusammensetzung enthält Bornitrid, Glimmer, Talk, Vermikullit und organische wasserlösliche Bindern (CMC).

Zur Verbesserung der Benetzung und Filmbildung der flüssigen Formtrennmittel werden oft oberflächenaktive Substanzen (Tenside, Emulgatoren) und Entschäumer eingesetzt. Insbesondere bei den wasserbasierten Trennmitteln müssen Stabilisatoren, wie beispielsweise Konservierungsstoffe, und Korrosionsschutzmittel verwendet werden. Beispiele für solche Trennmittel sind in unterschiedlichen Patentschriften (EP 0 585 128 B1, DE 100 05 187 C2, JP 2001-259787 A, US 5,378,270) zu finden.

In US 6,460,602 wird ein Verfahren zur Herstellung von Magnesiumbauteilen beansprucht, bei welchem z.B. BN in Kombination mit Seifen oder Wachsen sowie Wasser bzw. Ölen auf Oberflächen von Druckgussformen aufgebracht wird, wodurch die Standzeit der Formen deutlich erhöht werden soll. Die BN-Beschichtung verringert die Korrosion des Formenstahles durch das flüssige Metall. Allerdings muss nach jeweils 10 Schuss das Trennmittel erneut aufgebracht werden. Die Standzeiten der Formen konnten dadurch deutlich erhöht werden, da durch die Verwendung des BN der Korrosionsangriff des Magnesium deutlich verringert werden soll.

Die Applikation der flüssigen Formtrennmittel ist mit z.T. wesentlichen Problemen behaftet. Nach jedem Gießprozess bzw. nach der Entformung des Gussstückes wird die heiße Formenwandung bei Temperaturen beispielsweise im Bereich zwischen 200 - 300°C mit dem Trennmittel vorzugsweise durch Sprühapplikation beaufschlagt. Aufgrund der heißen Werkzeugoberfläche kommt es zu einem schnellen Verdampfen des Lösemittels, wodurch nur ein Teil des aufgesprühten Trennmittels (Leidenfrost-Phänomen) auf der Oberfläche verbleibt. Mit Eintritt der meist mehrere hundert Grad heißen Metallschmelzen wird der organische Anteil der Trennmittel thermisch zersetzt und bildet dabei ein Gaspolster zwischen Gießformenwandung und Gießmetall. Dieses Gaspolster führt zwar zu einer gewünschten Verlängerung der Gießwege durch die Isolationswirkung, andererseits werden dabei große Gasmengen im Werkstück gelöst. Diese gelösten Gase können zur Ausbildung von Poren und damit einer negativen Beeinflussung der mechanischen Eigenschaften des Gussstückes führen. Im Falle von Aluminium werden durch die gelösten Gase die Schweißeigenschaften deutlich verschlechtert bzw. eine Schweißeignung verhindert. Zur Lösung dieser Problematiken wurde zum einen die Formen vor dem Einfüllen der Metallschmelzen evakuiert und zum anderen der Pressdruck beim Giessen ständig erhöht (150MPa) . Des weiteren wurde der Anteil thermisch zersetzbarer Bestandteile im Trennmittel soweit als möglich reduziert. Die Anwendung von Vakuum (Evakuierung der Formkavität) vor dem Gießprozess reduziert zwar die eingeschlossene Gasmenge im Gusskörper, eine vollständige Verhinderung ist nicht möglich Die Erhöhung des Pressdruckes bei der Formgebung führt zu einer Verkleinerung der Gasporen, allerdings steigt deren Innendruck dadurch an und bei einem Blistertest (Warmauslagerung) kann es zur Ausbildung von aufgeblähten Bereichen in der Oberfläche von Gussstücken kommen.

Die zyklische Belastung der Formenoberfläche durch das Aufbringen von Schlichten die vorzugsweise Wasser als Lösemittel enthalten, erhöht zu dem stark die Gefahr der Ausbildung von Brandrissen und begrenzt dadurch die Lebensdauer der Formen. Des weiteren ist durch die zyklische Applikation eine erhebliche Belastung der Umwelt und der Mitarbeiter durch den ungenutzten Anteil an Trennmittel sowie die Zersetzungsprodukte der organischen Anteile gegeben. Die Verringerung der thermisch zersetzbaren Anteile durch Verwendung anorganischer Trennmittel hat den Vorteil, dass diese sich nicht unter der Einwirkung der hohen Temperaturen zersetzen, allerdings können diese Trennmittel bei der Einlagerung in das Werkstück zu einer negativen Beeinflussung der Oberflächeneigenschaften der Gusskörper, wie beispielsweise Verfärbungen, Verschlechterung der Benetzbarkeit oder Lackierfähigkeit) bzw. zu Defekten im Gussstückinneren führen.

Problematisch wird die Verwendung anorganischer Trennmittel bei unvollständiger Zersetzung der organischen Anteile, die dann zu festhaftenden Anbackungen an den Werkzeugoberflächen führen können. Insbesondere bei der Herstellung komplexer dünnwandiger Bauteile sind diese Anbackungen von Nachteil. Die Verwendung trockener körniger Trennmittel, wie in den Patentschriften DE 39 17 726 oder US 6,291,407 beschrieben, erfordert die Entwicklung einer speziellen Applikationstechnik, um dünne, homogene Schichten auf den komplexen Forminnenseiten zu gewährleisten, wie in den Patentschriften US 5,662,156, US 5,076,339, DE 100 41 309 oder DE 4313961 C2 beschrieben. Die Haftung der Trennmittel auf den metallischen Werkzeugoberflächen erfolgt durch Verwendung höherschmelzender organischer Komponenten in diesen körnigen Trennmitteln, wie beispielsweise Wachse oder Polymere, die sich bei Berührung mit dem Gießmetall thermisch wiederum zersetzen. Die trockenen Trennmittel müssen somit nach jedem Schuss bzw. Gießprozess erneut appliziert werden.

Eine Lösung der obigen Probleme ergibt sich, wenn anorganische Trennmittel, wie beispielsweise Bornitrid, Graphit, Glimmer, Talk, Siliziumnitrid, Molydänsulfid, ZrO₂, Al₂O₃, dauerhaft und temperaturstabil auf den Flächen der Formenwandungen gebunden werden. Eine Möglichkeit dauerhafte Trennschichten auf Stählen aufzubringen sind Oberflächenveredlungsverfahren wie CVD- und PVD-Verfahren, die zur Herstellung von Hartstoffschichten eingesetzt werden. Beim CVD-Verfahren sind allerdings vergleichsweise hohe Substrattemperaturen notwendig, die mit mindestens 900°C deutlich über den Anlasstemperaturen der Formstähle liegen. Beim PVD-Verfahren werden deutlich niedrigere Temperaturen von 300 - 500°C benötigt. Mittels spezieller Plasmaverfahren wurden TiN, TiC und TiB₂/TiN-Schichten auf Druckgussformen erzeugt. Die Schichten wiesen teilsweise sehr hohe Härten (HK_{0,005} 325 - 3300) auf. Die Standzeit der Formen konnte um den Faktor 30 - 80 stark erhöht werden und der Einsatz der Trennmittel um 97 % auf ca. 1 % in der Schlichte verringert werden. (Rie, Gebauer, Pfohl, Galvanotechnik 89, 1998 Nr. 10 3380 - 3388). Gänzlich konnte auf Trennmittel nicht verzichtet werden. Diese Beschichtungsverfahren sind jedoch besonders für komplexe großvolumige Bauteile (Formen) nicht trivial, da sie große Erfahrung sowie einen hohen apparativen Aufwand benötigen. Die Formen werden bevorzugt bei einem externen Lohnbeschichter nach aufwendiger Reinigung beschichtet.

Eine weitere Möglichkeit der Herstellung dauerhafter Trennschichten ist in der internationalen Patentanmeldung WO 2000/056481 beschrieben. Dabei werden dichte und/oder poröse keramische Trennschichten mit Dicken von 250 - 400 µm mittels thermischem Spritzen auf Formoberflächen appliziert. Die anorganischen Trennmittel weisen vorzugsweise sehr hohe Schmelzpunkte auf und können deshalb mit dem meist metallischen Formenmaterial aufgrund der dafür notwendigen hohen Temperaturen nicht versintert werden. Zur Anbindung anorganischen Trennmittel an die meist metallischen Formenwandungen sind daher korrosionsfeste und temperaturstabile Hochtemperaturbindephasen notwendig.

Für den Feinguss von Eisen oder Stählen wird beispielsweise ZrO₂ bzw. ZrO₂ /Al₂O₃-Gemische als Trennmittel eingesetzt. Für CaO-stabilisierte ZrO₂-Trennschichten auf keramischen Substraten, Graphittiegeln und Metallen etc. wird ein Alkalisilikat als Binder angegeben. Der Gehalt an Binder beträgt auch in diesem Fall nur wenige Prozent bezogen auf den anorganischen Trennstoffanteil. Für die Herstellung von Glaswaren wurden zum Schutze der metallischen Formen gemäß US 4,039,377 Graphit/BN-Mischungen mit Kombinationen von wasserlöslichen silikatischen und phosphatischen Bindern verwendet. Damit werden Trennschichten mit bis zu 2 Millimeter Dicke hergestellt.

Im kürzlich veröffentlichen Patent US 6,409,813 für die kontinuierliche Herstellung von Glas werden BN-Trennschichten mit einem oxidischen Anteil von 65 - 95 Gew.-% sowie einem BN-Anteil von 5 - 35 Gew.-%, jeweils nach dem Ausbrennen, mit Bindern auf Basis von Al₂O₃ oder stabilisiertem ZrO₂ beschrieben, die bei Temperaturen von mindesten 500 bis 550°C dichte Schichten auf metallischen Substraten ergeben, bei denen das BN vollständig von der oxidischen Phase umgeben ist. Die oxidische Bindephase wird über Fällungen aus Salzen oder Alkoxiden hergestellt. Die BN-Partikel sollen kleiner 5 µm sein. Die Standzeiten der metallischen Werkzeuge und Formen sollen dadurch erheblich gesteigert werden können.

In US 6,051,058 wird die Herstellung von BN-Schutzschichten mit Dicken von 0,2 bis 0,7 mm auf Feuerfestmaterialien für das kontinuierliche Gießen von Stählen beschrieben. Dabei wird BN mit 20 - 50 Gew.-% mit Hilfe von Hochtemperaturbindern in Form einer wässrigen Beschichtungslösung auf Basis von Metalloxiden der Gruppen ZrO₂, Zirkonsilikaten, Al₂O₃, SiO₂ und Aluminiumphosphaten auf das Feuerfestmaterial gebunden.

In der deutschen Patentanmeldung DE 196 47 368 A1 wird ein Verfahren zur Herstellung von temperaturbeständigen Verbundwerkstoffen mit einer silikatischen Hochtemperaturbindephasen beschrieben. Diese Bindephase ermöglicht die Herstellung von temperaturbeständigen Materialverbunden. In einem Beispiel werden Kernsande für Gießereizwecke durch den silikatischen Binder gebunden. In einem anderen Beispiel dieses Patentes wurde ein temperaturfester Formkörper aus einem Komposit aus 85 Gew.-% BN und 15 Gew.-% einer Bindephase, die aus der silikatischen Bindephase sowie nanodispersen ZrO₂-Anteilen besteht, hergestellt. Obwohl beispielsweise beim Aluminiumdruckguss Temperaturen angewendet werden, die weit unterhalb des Transformationsbereichs von SiO₂ liegen, und obwohl beim Verdichten dieser Schichten das Bindemittel eine starke Schrumpfung aufweist, wurden mit diesen Bindemitteln zwar BN-Schichten erzielt, die neben einer Haftung auf dem Substrat auch eine gewisse Antihaftwirkung gegenüber dem Gießmetall aufweisen, allerdings können die in DE 196 47 368 A1 beschriebenen Bindemittel das Eindringen von Metallschmelze in die Schicht insbesondere beim Druckguss nicht sicher verhindern. Dabei hat sich gezeigt, dass obwohl mit diesem Bindemittel die Bornitridkörner miteinander verbunden werden und damit eine Haftung untereinander sowie zum Substrat entsteht, wodurch mechanische Eigenschaften erzielt werden, die den drucklosen Guss bereits überstehen, die Körner dennoch nicht vollständig beschichtet werden und ihre Antihaftwirkung erhalten bleibt. In DE 196 47 368 A1 findet sich zwar der Hinweis, dass mit den dort beschriebenen Bindemitteln Bornitrid gebunden werden kann. Aber wie bereits erwähnt lässt sich mit den dort beschriebenen Rezepturen, wie eigene Untersuchungen gezeigt haben, keine Schicht auf Gussformen erzeugen, die druckgussbeständig ist. Dafür weisen diese Schichten keine ausreichende Haftung der BN-Partikel in der Schicht sowie auf der Metalloberfläche auf. Zudem weisen diese Schichten noch zu hohe Porositäten und relativ raue Oberflächen auf, die bei einer Druckbeaufschlagung der Metallschmelze zu einer Infiltration in der Oberfläche und damit formschlüssiger Verbindung zwischen Trennschicht und Gusskörper führen, die wiederum zu einer Zerstörung der Trennschicht bei Entnahme des Gusskörpers führt. Eine Steigerung des Binderanteiles führte zwar zu eine Verbesserung der Haftung und Verringerung der Porosität bei gleichzeitiger starker Verschlechterung des Benetzungsverhaltens, so dass bei Benetzungs- und Korrosionsversuchen das Aluminium stark an der Schicht anhaftet und nur gewaltsam unter Zerstörung der Trennschicht wieder entfernt werden kann.

Der vorliegenden Erfindung lag somit die Aufgabe zugrunde, dauerhafte Formtrennschichten mit anorganischen Trennmitteln für den Druckguss von Nichteisenmetallen, die relativ dichte, glatte Formtrennschichten mit hoher Haft- und Schnittfestigkeit (Adhäsion auf der Form und Kohäsion untereinander) auf den meist stählernen Gussformen gewährleisten, nicht von den jeweiligen Metallschmelzen benetzt werden, keine Korrosion durch das flüssige Metall aufweisen, bei komplexen Formgeometrien trotz dauerhafter Einbindung Schmiereigenschaften aufweisen, nicht zyklisch nach jedem Formgebungsprozess sondern nur in bestimmten vorgegeben Zeitabständen (Schusszahlen) appliziert werden müssen, eine Reparatur lokaler Beschädigungen der Trennschichten zulassen, sich mittels gängiger Beschichtungstechniken (Sprühen, Tauchen, Pinseln, Rollen, Rakeln, Schleudern) applizieren lassen, nach der thermischen Verdichtung keine weiteren gasförmigen Zersetzungsprodukte freisetzen, bei Temperatur kleiner 600 °C thermisch anbinden oder verdichten und eventuell durch die Metallschmelze selbst (in situ) erhalten werden sowie deren notwendigerweise enthaltenen organischen Anteile bei der Applikation und der nachfolgenden thermischen Verdichtung in Bezug auf Menge und Gefährlichkeit keine große Belastung der Umgebung darstellen.

Diese Aufgabe konnte überraschenderweise dadurch gelöst werden, dass refraktäre nanoskalige Bindemittel als Bindephase für Bornitrid eingesetzt werden.

Gegenstand der Erfindung ist eine Schlichte zur Herstellung einer langzeitstabilen Formtrennschicht enthaltend
A) einen anorganischen Binder, der kolloidale anorganische Partikel auf Basis von Silicium-, Zirkonium- oder Aluminumoxid oder Böhmit oder deren Gemische, zusätzliche anorganische Füllstoffe ausgewählt aus der Gruppe enthaltend SiO₂, TiO₂, ZrO₂, Al₂O₃, AlOOH, Y₂O₃, CeO₂, SnO₂, Eisenoxiden und Kohlenstoff sowie gegebenenfalls weitere Zusatzstoffe enthält, wobei
   i) im Falle eines kolloidale anorganische Partikel auf Basis von Siliciumoxid enthaltenden Binders dieser weiterhin ein oder mehrere Silane der allgemeinen Formel (1):

      Rₓ-Si-A₄₋ₓ (1)

      worin
      - A: jeweils unabhängig voneinander hydrolytisch abspaltbare Gruppen ausgewählt aus der Gruppe enthaltend Wasserstoff, Halogene, Hydroxylgruppen und substituierten oder unsubstituierten Alkoxoymit 2 bis 20 Kohlenstoffatomen, Aryloxy- mit 6 bis 22 Kohlenstoffatomen, Alkylaryoxy-, Acyloxy- und Alkylcarbonylgruppen,
      - R: jeweils unabhängig voneinander hydrolytisch nicht abspaltbare Gruppen ausgewählt aus der Gruppe enthaltend Alkyl- mit 1 bis 20 Kohlenstoffatomen, Alkenyl- mit 2 bis 20 Kohlenstoffatomen, Alkinyl- - mit 2 bis 20 Kohlenstoffatomen, Aryl- mit 6 bis 22 Kohlenstoffatomen, Alkaryl- und Arylalkylgruppen,
      - x: den Wert 0, 1, 2, 3 mit der Maßgabe, dass bei mindestens 50% der Stoffmenge der Silane x ≥ 1 ist,
      bedeuten, und
      unterstöchiometrische Mengen Wasser, bezogen auf die hydrolysierbaren Gruppen der Silankomponente und
      gegebenenfalls ein organisches Lösemittel
      oder
   ii) im Falle eines an kolloidalen anorganischen Partikeln auf Basis von Siliciumoxid freien Binders dieser weiterhin Wasser als Lösemittel enthält und unter den Bedingungen des Sol-Gel-Prozesses gegebenenfalls unter Hydrolyse und Kondensation ein Nanokompositsol ausbildet,
B) eine Suspension von Bornitrid-Partikeln in dem organischen Lösemittel für den Fall, dass der Binder (i) verwendet wird, oder in Wasser für den Fall, dass der Binder (ii) verwendet wird,
   und
C) ein organisches Lösemittel für den Fall, dass der Binder (i) verwendet wird, oder Wasser für den Fall, dass der Binder (ii) verwendet wird.

Die in den erfindungsgemäßen Schlichten enthaltenen Binder haben überraschenderweise gezeigt, dass sie Bornitridpartikel zu einer festen dichten Schicht binden können, die nicht von der Metallschmelze infiltriert wird und die die Antihaftaktivität der Bornitridkörner nicht reduziert. Als Bindemittel haben sich nanoskaliges SiO₂ in Verbindung mit einer speziellen Oberflächenmodifikation erwiesen, wie sie in Schutzrechtsfamilie zur deutschen Offenlegungsschrift DE 196 47 368 A1, deren diesbezügliche Offenbarung Teil der vorliegenden Anmeldung sein soll, beschrieben sind.

Die optimale Dispergierung der BN-Partikel, die Teilsubstitution von Silankomponenten, die Verwendung weiterer anorganischer Füllstoff im µm-Bereich sowie eine gezielte Einstellung des pH-Wertes der Schlichten als applikationsfertiges Beschichtungssystem bestehend aus Trennmittel und Binder ermöglichen überraschenderweise die Lösung der zugrunde liegenden Aufgabe.

Ein weiterer Gegenstand der Erfindung ist ein Verfahren zur Herstellung einer Schlichte zur Herstellung einer langzeitstabilen Formtrennschicht enthaltend
A) einen anorganischen Binder, der kolloidale anorganische Partikel auf Basis von Silicium-, Zirkonium- oder Aluminumoxid oder Böhmit oder deren Gemische, zusätzliche anorganische Füllstoffe ausgewählt aus der Gruppe enthaltend SiO₂, TiO₂, ZrO₂, Al₂O₃, AlOOH, Y₂O₃, CeO₂, SnO₂, Eisenoxiden und Kohlenstoff sowie gegebenenfalls weitere Zusatzstoffe enthält, wobei
   i) im Falle eines kolloidale anorganische Partikel auf Basis von Siliciumoxid enthaltenden Binders dieser weiterhin ein oder mehrere Silane der allgemeinen Formel (1):

      Rₓ-Si-A₄₋ₓ (1)

      worin
      - A: jeweils unabhängig voneinander hydrolytisch abspaltbare Gruppen ausgewählt aus der Gruppe enthaltend Wasserstoff, Halogene, Hydroxylgruppen und substituierten oder unsubstituierten Alkoxoymit 2 bis 20 Kohlenstoffatomen, Aryloxy- mit 6 bis 22 Kohlenstoffatomen, Alkylaryoxy-, Acyloxy- und Alkylcarbonylgruppen,
      - R: jeweils unabhängig voneinander hydrolytisch nicht abspaltbare Gruppen ausgewählt aus der Gruppe enthaltend Alkyl- mit 1 bis 20 Kohlenstoffatomen, Alkenyl- mit 2 bis 20 Kohlenstoffatomen, Alkinyl- - mit 2 bis 20 Kohlenstoffatomen, Aryl- mit 6 bis 22 Kohlenstoffatomen, Alkaryl- und Arylalkylgruppen,
      - x: den Wert 0, 1, 2, 3 mit der Maßgabe, dass bei mindestens 50% der Stoffmenge der Silane x ≥ 1 ist,
      bedeuten, und
      unterstöchiometrische Mengen Wasser, bezogen auf die hydrolysierbaren Gruppen der Silankomponente und
      gegebenenfalls ein organisches Lösemittel
      oder
   ii) im Falle eines an kolloidalen anorganischen Partikeln auf Basis von Siliciumoxid freien Binders dieser weiterhin Wasser als Lösemittel
      enthält und unter den Bedingungen des Sol-Gel-Prozesses gegebenenfalls unter Hydrolyse und Kondensation ein Nanokompositsol ausbildet,
B) eine Suspension von Bornitrid-Partikeln in dem organischen Lösemittel für den Fall, dass der Binder (i) verwendet wird, oder in Wasser für den Fall, dass der Binder (ii) verwendet wird,
   und
C) ein organisches Lösemittel für den Fall, dass der Binder (i) verwendet wird, oder Wasser für den Fall, dass der Binder (ii) verwendet wird,
dadurch gekennzeichnet dass Bornitrid in dem Lösungsmittel dispergiert wird und mit dem anorganischen Binder vermischt wird.

Eine bevorzugte Ausführungsform ist ein Verfahren zur optimalen Dispergierung der Bornitridpulver, mit dem die BN-Partikel in Form dispergierter Plättchen vorliegen und die resultierenden Suspensionen bzw. Schlichten minimale Viskositäten aufweisen. Wichtig ist dabei, dass die Dispergierung der Partikel auch in der Schlichte enthaltend den Binder erhalten bleibt. Diese optimale Dispergierung kann überraschenderweise durch Verwendung von organischen Polymeren, wie Polyvinylbutyralen oder Polyacrylsäuren im Falle von alkoholischen Lösemitteln bzw. Polyvinylalkoholen oder Polyvinylpyrrolidon im Falle von Wasser als Lösemittel, in Kombination mit einem Hochleistungs-Kreiselhomogenisator als Dispergieraggregat erhalten werden. Zur dauerhaften Anbindung und gleichzeitig guten Dispergierung ist des weiteren eine gezielte Einstellung des pH-Wertes der Schlichte notwendig, da der synthesebedingte pH-Wert der Bindephase etwa in der Größenordnung des isoelektrischen Punktes des BN liegt und zu einem frühzeitiger Ausfallen des BN führt. Überraschenderweise kann in einem pH-Bereich von ca. 3 - 4 zum einen eine gute Anbindung (Hydrolyse/Kondensation) und zum anderen eine ausreichende Dispergierung/Stabilität der BN-Partikel erhalten werden.

Eine deutliche Erhöhung der Applikationstemperatur bzw. ein verzögertes Abbinden auf dem Substrat kann durch die Teilsubstitution von einer Silankomponente (Methyltriethoxysilan) durch ein Phenyltriethoxysilan erreicht werden. Dies ermöglicht die Applikation von dichten Trennschichten auf Formen mit erhöhten Oberflächentemperaturen von über 80°C, was mit dem System basierend auf DE 196 47 368 nicht möglich ist.

Die vorzugsweise enthaltenen organischen Anteile stellen bei der Applikation und der nachfolgenden thermischen Verdichtung in Bezug auf Menge und Gefährlichkeit keine große Belastung der Umgebung dar; nach der thermischen Verdichtung werden keine weiteren gasförmigen Zersetzungsprodukte freigesetzt.

Die Temperatur zur der notwendigen thermischen Anbindung bzw. Verdichtung der langzeitstabilen Formtrennschicht ist kleiner 600 °C, also unterhalb der Anlasstemperatur, und kann unter Umständen sogar durch die Metallschmelze selbst (in situ) erhalten werden.

Dadurch war es möglich mittels gängiger Beschichtungstechniken (Sprühen, Tauchen, Pinseln, Rollen, Rakeln, Schleudern) glatte, vergleichsweise dichte Trennschichten in einem Dickenbereich von 1 bis 50 µm zu erhalten, die einerseits nicht durch Aluminium benetzt werden bzw. nach mehrstündiger Auslagerung in flüssigem Aluminium bei 750 °C keinerlei Korrosionsschädigungen aufweisen. Des weiteren konnte die Schichtfestigkeit derart gesteigert werden, dass beim Gitterschnitt-Test (DIN ISO 2409) die Klassifikation 0-1 erhalten bzw. bei dem nachfolgenden mehrfachen Tape-Test keine Schädigung der Schicht beobachtet werden konnte. Beim Taber-Test (DIN 52347) zeigen diese Schichten zwar noch einen mit zunehmender Zyklenzahl linear ansteigenden Abrieb von 3,6 mg pro 100 Zyklen, Schichten basierend auf DE 196 47 368 hingegen können bei gleichem BN zu Binderverhältnis aufgrund der zu geringen Festigkeiten und des damit verbundenen Abriebs nicht mit diesem Verfahren getestet werden.

Ein weiterer Gegenstand der vorliegenden Erfindung betrifft eine langzeitstabile Formtrennschicht, dadurch gekennzeichnet, dass sie aus einer Schlichte enthaltend
A) einen anorganischen Binder, der kolloidale anorganische Partikel auf Basis von Silicium-, Zirkonium- oder Aluminumoxid oder Böhmit oder deren Gemische, zusätzliche anorganische Füllstoffe ausgewählt aus der Gruppe enthaltend SiO₂, TiO₂, ZrO₂, Al₂O₃, AlOOH, Y₂O₃, CeO₂, SnO₂, Eisenoxiden und Kohlenstoff sowie gegebenenfalls weitere Zusatzstoffe enthält, wobei
   i) im Falle eines kolloidale anorganische Partikel auf Basis von Siliciumoxid enthaltenden Binders dieser weiterhin ein oder mehrere Silane der allgemeinen Formel (1):

      Rₓ-Si-A₄₋ₓ (1)

      worin
      - A: jeweils unabhängig voneinander hydrolytisch abspaltbare Gruppen ausgewählt aus der Gruppe enthaltend Wasserstoff, Halogene, Hydroxylgruppen und substituierten oder unsubstituierten Alkoxoymit 2 bis 20 Kohlenstoffatomen, Aryloxy- mit 6 bis 22 Kohlenstoffatomen, Alkylaryoxy-, Acyloxy- und Alkylcarbonylgruppen,
      - R: jeweils unabhängig voneinander hydrolytisch nicht abspaltbare Gruppen ausgewählt aus der Gruppe enthaltend Alkyl- mit 1 bis 20 Kohlenstoffatomen, Alkenyl- mit 2 bis 20 Kohlenstoffatomen, Alkinyl- - mit 2 bis 20 Kohlenstoffatomen, Aryl- mit 6 bis 22 Kohlenstoffatomen, Alkaryl- und Arylalkylgruppen,
      - x: den Wert 0, 1, 2, 3 mit der Maßgabe, dass bei mindestens 50% der Stoffmenge der Silane x ≥ 1 ist,
      bedeuten, und
      unterstöchiometrische Mengen Wasser, bezogen auf die hydrolysierbaren Gruppen der Silankomponente und
      gegebenenfalls ein organisches Lösemittel
      oder
   ii) im Falle eines an kolloidalen anorganischen Partikeln auf Basis von Siliciumoxid freien Binders dieser weiterhin Wasser als Lösemittel
      enthält und unter den Bedingungen des Sol-Gel-Prozesses gegebenenfalls unter Hydrolyse und Kondensation ein Nanokompositsol ausbildet,
B) eine Suspension von Bornitrid-Partikeln in dem organischen Lösemittel für den Fall, dass der Binder (i) verwendet wird, oder in Wasser für den Fall, dass der Binder (ii) verwendet wird,
   und
C) ein organisches Lösemittel für den Fall, dass der Binder (i) verwendet wird, oder Wasser für den Fall, dass der Binder (ii) verwendet wird,
durch thermische Aushärtung bei Temperaturen über 300°C erhältlich ist.

Die erfindungsgemäßen Formtrennschichten gestatten die Anwendung im Druckgussbereich, wobei Zyklenzahlen von mehr als 30 Schüssen möglich sind. Zu Reparaturzwecken kann dieses Formtrennschichtensystem auf lokal engbegrenzten Stellen einer bereits geschlichteten Form beispielsweise mittels Airbrush-Technik oder Pinsel aufgebracht und verdichtet werden, ohne dass ein nennenswerter Verlust der Eigenschaften zu beobachten ist.

Eine vollständige Entfernung der Formtrennschicht mittels eines CO₂-Entlackungsgerätes ist ebenfalls möglich.

Ein weiterer Gegenstand der Erfindung ist ein Verfahren zur Herstellung der erfindungsgemäßen langzeitstabilen Formtrennschicht, dadurch gekennzeichnet, dass die erfindungsgemäße Schlichte zu einer fest haftenden Schicht auf Metalloberflächen aufgetragen und bei Temperaturen über 300°C thermische ausgehärtet wird. Durch das erfindungsgemäße Verfahren, wird vorzugsweise hexagonales Bornitrid mittels der erfindungsgemäßen Binder dauerhaft und temperaturstabil auf Formenoberflächen, wie beispielsweise Metalle, unlegierte, niedriglegierte oder hochlegierte Stähle, Kupfer oder Messing, gebunden.

Das Trennmittel BN weist vorzugsweise einen mittleren Partikeldurchmesser kleiner 100 µm, bevorzugt kleiner 30 µm, besonders bevorzugt kleiner 10 µm und vorzugsweise größer 0,1 µm, besonders bevorzugt größer 1 µm auf. Die spezifische Oberfläche, gemessen nach der BET-Methode, beträgt vorzugsweise größer 1 m²/g und besonders bevorzugt größer 5 m²/g. Das eingesetzte BN kann bis 10 Gew.-% verschiedener Verunreinigungen und Zusätze enthalten. Insbesondere sind zu erwähnen Borsäure, Bortrioxid, Kohlenstoff, Alkali- oder Erdalkaliborate. Es wird jedoch bevorzugt, dass möglichst reines, ausgewaschenes BN mit einer Reinheit von mindestens 98%, bevorzugt 99%, eingesetzt wird. Insbesondere sind Partikelgrößen von 2 bis 3 µm bevorzugt. Vorzugsweise weist das Bornitrid eine hexagonale, grafitartige Kristallstruktur auf. Weiterbevorzugt ist es, wenn das Bornitrid deagglomeriert in der Schlichte vorliegt.

Bezogen auf die obengenannten Komponenten der langzeitstabilen Formtrennschicht beträgt der Feststoffanteil des anorganischen Binders vorzugsweise zwischen 5 und 95, vorzugsweise 20 bis 80 und besonders bevorzugt zwischen 30 und 70 Gew.-%.

Spezielle Beispiele für anorganische Füllstoff sind Sole und nanoskalige Pulver, welche vorzugsweise einen Teilchendurchmesser von kleiner 300 nm, bevorzugt kleiner 100 nm und besonders bevorzugt kleiner 50 nm aufweisen, von SiO₂, TiO₂, ZrO₂, Al₂O₃, AlOOH, Y₂O₃, CeO₂, SnO₂, Eisenoxiden, Kohlenstoff (Russ, Graphit), bevorzugt sind SiO₂ TiO₂, ZrO₂, Y-ZrO₂, Al₂O₃ und AlOOH. Besonders bevorzugt sind Nanopartikel, welche vorzugsweise einen Teilchendurchmesser von kleiner 300 nm, bevorzugt kleiner 100 nm und besonders bevorzugt kleiner 50 nm aufweisen, von Silicium- oder Zirkoniumoxide bzw. Gemische derselben.

Beispiele für die genannten hydrolisierbaren Gruppen A in Formel (1) sind Wasserstoff, Halogene (F, Cl, Br und I) Alkoxoy- (beispielsweise Ethoxy-, i-Propoxy-, n-Propoxy-, und Butoxygruppen), Aryloxy- (beispielsweise Phenoxygruppe), Alkylaryoxy- (beispielsweise Benzyloxygruppe), Acyloxy-(beispielsweise Acetoxy-, Propionyloxygruppen) und Alkylcarbonylgruppen (beispielsweise Acteylgruppe).

Besonders bevorzugte Reste sind C₂₋₄-Alkoxygruppen, insbesondere Ethoxygruppe.

Die hydrolytisch nicht abspaltbaren Reste R sind vorwiegend ausgewählt aus der Gruppe enthaltend Alkyl- (C₁₋₄-Alkyl wie Methyl-, Ethyl-, Propyl- und Butylrest), Alkenyl- (C₂₋₄-Alkenylwie Vinyl-, 1-Propenyl-, 2-Propenyl- und Butenylrest), Alkinyl- , Aryl-, Alkaryl- und Arylalkylreste.

Besonders bevorzugte Reste sind gegebenenfalls substituierte C₁₋₄-Alkylgruppen, insbesondere Methyl- oder Ethylgruppen, und gegebenenfalls substituierte C₆₋₁₀-Arylgruppen, insbesondere Phenylgruppe.

Die Reste A und R können unabhängig voneinander einen oder mehrere übliche Substituenten, wie beispielsweise Halogen-, Alkoxy-, Hydroxy-, Amino-, und Epoxidgruppen, aufweisen.

Weiter ist bevorzugt, dass in der obigen Formel (1) x den Wert 0, 1, 2 und besonders bevorzugt den Wert 0 oder 1, aufweist. Ferner weisen vorzugsweise mindestens 60% und insbesondere mindestens 70 Stoffmengen-% den Wert x = 1 auf.

Die erfindungsgemäße Hochtemperaturbindephase kann beispielsweise aus reinem Methyltriethoxysilan (MTEOS) oder aus Mischungen von MTEOS und Tetraethoxysilan (TEOS) oder MTEOS und Phenyltriethethoxysilan (PTEOS) und TEOS hergestellt werden.

Die erfindungsgemäß verwendeten Silane der allgemeinen Formel (1) können ganz oder teilweise in Form von Vorkondensaten eingesetzt werden, d.h. Verbindungen, die durch teilweise Hydrolyse der Silane der Formel (1) allein oder im Gemisch mit anderen hydrolisierbaren Verbindungen entstanden sind. Derartige, im Reaktionsgemisch vorzugsweise löslichen Oligomere können geradkettige oder zyklische niedermolekulare Teilkondensate mit einem Kondensationsgrad von beispielsweise etwa 2 bis 100, insbesondere 2 bis 6, sein.

Die zur Hydrolyse und Kondensation eingesetzte Wassermenge beträgt vorzugsweise 0,1 bis 0,9 und besonders bevorzugt 0,25 bis 0,8 Mol Wasser pro Mol der vorhandenen hydrolisierbaren Gruppen.

Die Hydrolyse und Kondensation der silikatischen Bindephase wird unter Sol-Gel-Bedingungen in Gegenwart saurer Kondensationskatalysatoren, bevorzugt Salzsäure, bei einem pH-Wert bevorzugt zwischen 1 und 7 besonders bevorzugt zwischen 1 und 3 durchgeführt. Eine erfindungsgemäße Schlichte wird vorzugsweise durch eine optimale Dispergierung der BN-Partikel, der Teilsubstitution von Silankomponenten, der Verwendung weiterer anorganischer Füllstoff im µm-Bereich und durch Zugabe einer bestimmten Menge von Salzsäure als Katalysator einer gezielten Hydrolyse bzw. Kondensationsreaktion sowie einer gezielte Einstellung des pH-Wertes der Schlichten erhalten. Die Verwendung von Kondensationskatalysatoren führt dazu, dass das vorher eventuell zweiphasig vorliegende Silan-/Kieselsolgemisch einphasig wird und aufgrund der Hydrolyse- bzw. Kondensationsreaktionen eine Anbindung der Silane an die SiO₂-Partikel bzw. an das metallische Substrat bzw. das Bornitrid ermöglicht wird. Ohne HCl-Zugabe resultiert häufig ein zweiphasiges Gemisch, wobei der Kieselsolanteil geliert bzw. ausfällt. Diese Untersuchungen wurden mit kommerziellen basisch sowie sauer stabilisierten Kieselsolen durchgeführt und führten stets zum gleichen Ergebnis.

Vorzugsweise wird neben dem Lösungsmittel, das bei der Hydrolyse entsteht kein weiteres Lösungsmittel angewandt, es können jedoch falls gewünscht, Wasser, alkoholische Lösungsmittel (beispielsweise Ethanol) oder andere polare, protische und aprotische Lösungsmittel (Tetrahydrofuran, Dioxan) eingesetzt werden. Wenn andere Lösungsmittel eingesetzt werden müssen, sind Ethanol und 1-Propanol, 2-Propanol, Ethylenglykol und dessen Derivate (beispielsweise Diethylenglykolmonoethylether, Diethylenglykolmonobutylether) bevorzugt.

Zur Herstellung des Binders können gegebenenfalls weitere Zusatzstoffe in Mengen von bis zu 50 Gew.-% bevorzugt weniger als 25 besonders bevorzugt weniger als 10 Gew.-% eingesetzt werden, beispielsweise Härtungskatalysatoren wie Metallsalze, und Metallalkoxide, organische Dispergier- und Bindemittel wie Polyvinylbutyrale, Polyethylenglykole, Polyethylenimine, Polyvinylalkohole, Polyvinylpyrrolidone, Pigmente, Farbstoffe, oxidische Partikel sowie glasbildende Komponenten (beispielsweise Borsäure, Borsäurester, Natriumethylat, Kaliumacetat, Aluminium-sek-butylat), Korrosionsschutzmittel und Beschichtungshilfsmittel.

Gegebenenfalls weitere zusätzlichen anorganischen Füllstoffe können aus einer oder mehrerer der Substanzklassen (SiO₂, Al₂O₃, ZrO₂, TiO₂, Mullit, Böhmit, Si₃N₄, SiC, AlN etc.) ausgewählt werden. Die Partikeldurchmesser sind gewöhnlich kleiner 10 µm bevorzugt kleiner 5 µm und besonders bevorzugt kleiner 1 µm.

Zur Herstellung ZrO₂- oder Al₂O₃-basierter kolloidaler anorganischer Partikel können als Ausgangsverbindungen der Zirkonkomponenten beispielsweise ein oder mehrere Zirkonoxidprekusoren der Substanzklassen Zirkonalkoxide, Zirkonsalze oder komplexierten Zirkonverbindungen oder kolloidale ZrO₂-Partikel, welche unstabilisiert oder stabilisiert sein können, verwendet werden.

Die Ausgangskomponenten der Aluminiumkomponenten können beispielsweise Aluminiumsalze und Aluminiumalkoxide ausgewählt oder nanoskalige Al₂O₃ oder AlOOH-Partikel in Form von Solen oder Pulvern verwendet werden.

Als Lösemittel zur Herstellung der ZrO₂/Al₂O₃-basierten Bindephasen können neben Wasser, auch aliphatische und alizyklische Alkohole mit 1 bis 8 Kohlenstoffatomen (insbesondere Methanol, Ethanol, n- und i-Propanol, Butanol), aliphatische und alizyklische Ketone (insbesondere Aceton, Butanon) mit 1 bis 8 Kohlenstoffatomen, Ester (insbesondere Essigsäureethylester, Ether wie zum Beispiel Diethylether, Dibutylether, Anisol, Dioxan Tetrahydrofuran, Glycolether, wie Mono-, Di-, Tri- und Polyglycolether, Glycole, wie Ethylenglycol, Diethylenglycol und Polypropylenglycol oder andere polare, protische und aprotische Lösungsmittel eingesetzt werden. Selbstverständlich können auch Mischungen derartiger Lösemittel eingesetzt werden. Bevorzugt sind neben Wasser, aliphatische Alkohole (z.B. Ethanol, 1-Propanol, 2-Propanol) sowie Ethylenglykol und dessen Derivate (insbesondere Ether, wie z.B. Diethylenglykolmonoethylether, Diethylenglykolmonobutylether.

Die etwaige Zugabe zusätzlicher anorganischer Füllstoffe kann zu den unterschiedlichsten Zeitpunkten erfolgen. So können diese Füllstoffe bei der Herstellung der BN-Suspension eingearbeitet werden, sie können aber auch zu dem Binder in Form von Pulvern oder Suspensionen zugegeben werden.

Zur Stabilisierung der oxidischen Partikel in der flüssigen Phase können neben anorganischen und organischen Säuren auch Modifizierungsmittel eingesetzt werden, die Anhydridgruppen, Säureamidgruppen, Aminogruppen, SiOH-Gruppen, hydrolisierbare Reste von Silanen sowie ß-Dicarbonylverbindungen enthalten.

Besonders bevorzugt sind Monocarbonsäuren mit 1 bis 24 Kohlenstoffatomen, wie beispielsweise Ameisensäure, Essigsäure, Propionsäure, Buttersäure, Hexansäure, Methacrylsäue, Citronensäure, Stearinsäure, Methoxyessigsäure, Dioxaheptansäure, 3,6,9-Trioxadekansäure sowie die entsprechenden Säurehydride und Säureamide.

Bevorzugte ß-Dicarbonylverbindungen sind solche mit 4 bis 12, insbesondere mit 5-8 Kohlenstoffatomen, wie beispielsweise Diketone wie Acetylaceton, 2,4-Hexandian, Acetessigsäure, Acetessigsäure-C₁₋₄-alkylester, wie Acetessigsäureethylester.

Zur Dispergierung der oxidischen Pulverpartikel in den Bindephasen können neben den üblichen Rühraggregaten (Dissolver, Leitstrahlmischer), Ultraschallbeaufschlagung, Kneter, Schneckenextruder, Walzenstühle, Schwingmühlen, Planetenmühlen, Mörsermühlen, und insbesondere Attritormühlen eingesetzt werden.

Bevorzugt zur Dispergierung der nanoskaligen Pulvern sind Attritormühlen mit kleinen Mahlkörpern, gewöhnlich kleiner 2 mm, bevorzugt kleiner 1 mm und besonders bevorzugt kleiner 0,5 mm Durchmesser.

Eine bei der Erfindung einsetzbare, Bornitrid-Partikel enthaltenen Suspension kann durch ein Verfahren hergestellt werden, bei dem Bornitrid-Partikel in einem organischen Lösemittel unter Zugabe von Polyvinylbutyral oder einer Polyacrylsäure oder in Wasser unter Zugabe eines Polyvinylalkohols oder Polyvinylpyrrolidon suspendiert werden.

Zur Herstellung der BN-Suspensionen, sind zur Dispergierung hochtourige Dispergieraggregate mit Rotor/Statorsystemen wie Ultra Turrax oder Kreiselhomogenisatoren bevorzugt. Besonders bevorzugt sind dabei Aggregate mit mehrstufigen Rotor/Statorsystemen (Cavitron Hochleistungskreiselhomogenisator).

Die Zugabe des anorganischen Trennmittels kann durch Vermischen von separaten BN-Suspensionen und Binder erfolgen, sie kann aber auch durch Einarbeitung oder Dispergierung der BN-Partikel im Binder erfolgen. Bevorzugt erfolgt die Herstellung durch Vermischen von separater BN-Suspension mit separatem Binder unter rühren.

In manchen Fällen ist es vorteilhaft vor der Applikation der Schichten den pH-Wert des Binders bzw. der Schlichte einzustellen. Gewöhnlich wird dazu eine Base, bevorzugt eine Base in einem alkoholischen Lösemittel und besonders bevorzugt eine ethanolische Natriumethylatlösung verwendet. Der pH-Wert wird gewöhnlich zwischen 1 und 7 bevorzugt zwischen 2,5 und 5 und besonders bevorzugt zwischen 3 und 4 eingestellt. Die im Reaktionsverlauf gebildeten Salze können durch Sedimentation oder Zentrifugation abgetrennt werden.

Nach der Fertigstellung der Schlichte ist es in manchen Fällen vorteilhaft, die Schlichte vor der Applikation weiter zu homogenisieren. Bevorzugt erfolgt dies durch rühren der Schlichte über Nacht.

In manchen Fällen ist es weiterhin vorteilhaft, durch Zugaben exakter Wassermengen eine definierte Hydrolyse bzw. Kondensationsreaktion in der fertigen Schlichte zu ermöglichen, bevorzugt wird dabei ein Gesamtwassergehalt von weniger als 1 Mol Wasser pro Mol hydrolisierbarer Alkoxidgruppe eingestellt.

Als Substrate für die erfindungsgemäßen Formtrennschichten eignen sich die verschiedensten anorganischen Materialien.

Besonders geeignete Substratmaterialien sind metallische Materialien wie Eisen, Chrom, Kupfer, Nickel, Aluminium, Titan, Zinn und Zink und deren Legierungen, wie beispielsweise Gusseisen, Stahlguss, Stähle, Bronzen oder Messing, sowie anorganische Nichtmetalle wie Keramiken, Feuerfestmaterialien und Gläser in Form von Folien, Geweben, Blechen, Platten oder Formstücken.

Die trennmittelhaltigen Beschichtungssole lassen sich mittels gängiger Beschichtungsmethoden wie Rakeln, Tauchen, Fluten, Schleudern, Sprühen, Bürsten und Streichen auf den Substraten/Formoberflächen applizieren. Zur Verbesserung der Haftung kann es sich in manchen Fällen als vorteilhaft erweisen, das Substrat vor dem Kontaktieren mit verdünnten oder unverdünnten Bindersolen bzw. deren Vorstufen oder anderen Primern zu behandeln.

Das Formtrennmittel bedeckt vorzugsweise alle Flächen der Gussformen, die mit dem teilerschmolzenen bzw. geschmolzenen Metall in Kontakt kommen.

Der Feststoffgehalt der Schlichten kann in Abhängigkeit vom gewählten Beschichtungsverfahren durch Zugabe von Lösemittel oder Wasser eingestellt werden. Für eine Sprühbeschichtung wird gewöhnlich ein Feststoffgehalt zwischen 2 und 70 Gew.-% bevorzugt zwischen 5 und 50 besonders bevorzugt zwischen 10 und 30 Gew.-% eingestellt. Für andere Beschichtungsverfahren kann selbstverständlich eine anderer Feststoffgehalt eingestellt werden. Ebenso ist die Zugaben von Thixotropierungsmittel bzw. Stellmitteln wie zum Beispiel Cellulosedrivaten möglich.

Eine isostatische Verdichtung frisch applizierter Trennschichten vor der abschließenden Härtung kann die Packungsdichte weiter erhöhen und damit die Festigkeit und die Lebensdauer der Schicht ebenfalls deutlich erhöhen. Dazu wird das Aufbringen einer weiteren nahezu binderfreien BN-Trennschicht empfohlen, die ein Verkleben der noch nicht gehärteten Schicht mit dem umgebenden Medium bei der isostatischen Verdichtung verhindert.

Der abschließenden Härtung kann eine oder mehrere Trocknungsstufen bei Raumtemperatur oder leicht erhöhter Temperatur zum Beispiel in einem Umlufttrockenschrank, durch Beheizung oder Temperierung der Form selbst vorangehen. Bei oxidationsempfindlichen Substraten kann die Trocknung oder nachfolgende Härtung in einer Schutzgasatmosphäre, wie beispielsweise Stickstoff oder Argon, oder im Vakuum erfolgen.

Die thermische Aushärtung erfolgt durch Wärmebehandlung bei Temperaturen über 300°C.

Die Wärmebehandlung der Formtrennschichten kann in Öfen, durch Heißgas, durch direkte Gasbeflammung der Formoberflächen, durch direkte oder indirekte IR-Beheizung oder auch in-situ durch Kontaktieren der Formtrennschichten mit dem flüssigen, geschmolzenen oder teilerschmolzenen Gießmetall erfolgen.

Die Dicke der hiernach ausgehärteten Formtrennschicht beträgt vorzugsweise 0,5 bis 250 µm, besonders bevorzugt 1 bis 200 µm. Insbesondere bevorzugt wird eine Schichtdicke von 5 bis 20 µm für den Aluminiumdruckguss eingesetzt. Der BN-Gehalt der ausgehärteten Formtrennschicht liegt vorzugsweise im Bereich 20-80%, wobei der jeweilig verbleibende Rest durch die Nanopartikel enthaltenden anorganischen Binder gebildet wird.

### Beispiele

### Synthese silikatischer Bindersole:

### Beispiel 1:

### MTKS; R_{OR} 0, 4

65,5 g MTEOS und 19,1 g TEOS werden gemischt. Eine Hälfte der Mischung wird unter starkem Rühren mit 14,2 g Kieselsol (LEVASIL 300/30) und 0,4 ml konzentrierter Salzsäure zur Reaktion gebracht. Nach 5 Minuten wird die zweite Hälfte der Silanmischung zu dem Ansatz gegeben und noch 5 Minuten weitergerührt. Nach Stehen über Nacht wird der Ansatz mit ethanolischer Natriumethanolat-Lösung auf einen pH-Wert von 3 eingestellt. Die im Reaktionsverlauf gebildeten Salze werden durch Zentrifugieren abgetrennt.

### Beispiel 2:

### MTZS; R_{OR} 0, 75

65,5 g MTEOS und 19,1 g TEOS werden gemischt. Eine Hälfte der Mischung wird unter starkem Rühren mit 49,7 g Zirkondioxidsuspension mit 60 Gew.-% Feststoffanteil (29,82 g monoklines ZrO₂ (INM; mittlere Partikelgröße: ca. 8 nm) in 19,88 g Wasser) und 0,4 ml konzentrierter Salzsäure zur Reaktion gebracht. Nach 5 Minuten wird die zweite Hälfte der Silanmischung zu dem Ansatz gegeben und noch 5 Minuten weitergerührt. Nach Stehen über Nacht wird der Ansatz mit ethanolischer Natriumethanolat-Lösung auf einen pH-Wert von 3 eingestellt. Die im Reaktionsverlauf gebildeten Salze werden durch Zentrifugieren abgetrennt.

### Beispiel 3:

### MTKZS; R_{OR} 0,75

Eine Mischung aus 16,4 g MTEOS und 4,8 g TEOS wird mit 14,2 g Levasil 300/30, das zuvor mit konzentrierter Salzsäure auf einen pH von 7 eingestellt wurde, und 0,2 ml konzentrierter Salzsäure zur Reaktion gebracht. Parallel dazu wird eine Mischung aus 26,2 g MTEOS und 7,7 g TEOS mit 31,8 g einer 50%igen Zirkondioxidsuspension (15,9 g monoklines ZrO₂ (INM; mittlere Partikelgröße: ca. 8 nm) in 15,9 g Wasser) und 0,32 ml konzentrierter Salzsäure zur Reaktion gebracht. Nach 10 Minuten werden die beiden Ansätze vereint. Nach weiteren 5 Minuten wird der kombinierte Ansatz mit einer weiteren Silanmischung bestehend aus 42,6 g MTEOS und 12,4 g TEOS zu dem Ansatz gegeben und noch 5 Minuten weitergerührt. Nach Stehen über Nacht wird der Ansatz mit ethanolischer Natriumethanolat-Lösung auf einen pH-Wert von 3 eingestellt. Die im Reaktionsverlauf gebildeten Salze werden durch Zentrifugieren abgetrennt.

### Beispiel 4:

### MTKS-PT; R_{OR} 0,4

65,5 g MTEOS und 19,1 g TEOS werden gemischt und unter starkem Rühren mit 28,4 g Kieselsol (LEVASIL 300/30) und 0,8 ml konzentrierter Salzsäure zur Reaktion gebracht. Nach 5 Minuten wird eine weitere Silanmischung - bestehend aus 88,3 g Phenyltriethoxysilan (PTEOS) und 19,1 g TEOS - zu dem Ansatz gegeben und noch 5 Minuten weitergerührt. Nach Stehen über Nacht wird der Ansatz mit ethanolischer Natriumethanolat-Lösung auf einen pH-Wert von 3 eingestellt. Die im Reaktionsverlauf gebildeten Salze werden durch Zentrifugieren abgetrennt.

### Beispiel 5:

### MTKS-PTTnP; R_{OR} 0,4

65,5 g MTEOS und 19,1 g TEOS werden gemischt und unter starkem Rühren mit 28,4 g Kieselsol (LEVASIL 300/30) und 0,8 ml konzentrierter Salzsäure zur Reaktion gebracht. Nach 5 Minuten wird eine weitere Silanmischung - bestehend aus 88,3 g Phenyltriethoxysilan, 9,56 g TEOS und 12,1 g Tetra-n-Propoxysilan - zu dem Ansatz gegeben und noch 5 Minuten weitergerührt. Nach Stehen über Nacht wird der Ansatz mit ethanolischer Natriumethanolat-Lösung auf einen pH-Wert von 3 eingestellt. Die im Reaktionsverlauf gebildeten Salze werden durch Zentrifugieren abgetrennt.

### Beispiel 6:

### MTKS-PTTEE, R_{OR} 0,4

65,5 g MTEOS und 19,1 g TEOS werden gemischt und unter starkem Rühren mit 28,4 g Kieselsol (LEVASIL 300/30) und 0,8 ml konzentrierter Salzsäure zur Reaktion gebracht. Nach 5 Minuten wird eine weitere Silanmischung - bestehend aus 88,3 g Phenyltriethoxysilan, 9,56 g TEOS und 17,6 g Tetra-Ethoxyethoxysilan - zu dem Ansatz gegeben und noch 5 Minuten weitergerührt. Nach Stehen über Nacht wird der Ansatz mit ethanolischer Natriumethanolat-Lösung auf einen pH-Wert von 3 eingestellt. Die im Reaktionsverlauf gebildeten Salze werden durch Zentrifugieren abgetrennt.

### Herstellung von silikatisch gebundener BN-Schichten:

### Beispiel 7:

### Herstellung ethanolischer BN-Suspensionen

0,8 kg BN-Pulver (BN E1; Wacker-Chemie GmbH, München) mit einer spezifischen Oberfläche, gemessen nach der BET-Methode, von ca. 12 m²/g und einer Reinheit von 99,0% werden in 1580 g wasserfreiem, vergälltem Ethanol (MEK), in welchem 20 g Polyvinylbutyral (Mowital B 30 T; Hoechst AG, Frankfurt) gelöst ist, eingerührt. Die Suspension wird in einen kühlbaren Rührbehälter gefüllt und mit einem hochtourigen Rotor-Stator-Kreiselhomogenisator (Cavitron CD 1010) für die Dauer von 60 min dispergiert. Die erhaltene Suspension wird nach Abkühlung auf Raumtemperatur auf einen Feststoffgehalt von 30 Gew.-% durch Zugabe von 266,7 g wasserfreiem, vergälltem Ethanol verdünnt.

### Beispiel 8:

### Herstellung der BN/MTKS-Schlichte, Massenverhältnis BN: SiO₂ = 2:1

25 g MTKS R_{OR} 0,4 Binder wird mit 1,25 g VE-Wasser aktiviert und 1 h gerührt. Danach wird dem Binder 50 g der ethanolischen BN-Suspension aus Beispiel 7 mit einem Feststoffgehalt von 30 Gew.-% unter Rühren zugemischt. Um den Feststoffgehalt auf 15 Gew.-% einzustellen wird die Suspension mit 75 g Ethanol verdünnt.

### Beispiel 9:

### Herstellung der BN/MTKS-Schlichte, Massenverhältnis BN: SiO₂ = 1:1

50 g MTKS R_{OR} 0.4 Binder wird mit 2.5 g VE-Wasser aktiviert und 1 h gerührt. Danach wird dem Binder 50 g der ethanolischen BN-Suspension aus Beispiel 7 mit einem Feststoffgehalt von 30 Gew.-% unter Rühren zugemischt. Der Feststoffgehalt der Schlichte (bezogen auf BN) beträgt 30 Gew.-%. Zur besseren Verarbeitbarkeit kann der Feststoffgehalt durch Zugabe von 100 g wasserfreiem Ethanol auf 15 Gew.-% verdünnt werden.

### Beispiel 10:

### Herstellung der BN/MTKZS-Schlichten, BN : (SiO₂ + n-ZrO₂) = 2 :1

Massenverhältnis n-ZrO₂-Partikel : SiO₂ -Partikel : 20 : 80 21.4 g MTKZS- R_{OR} 0,75-Binder wird mit 50 g der ethanolischen BN-Suspension aus Beispiel 7 mit einem Feststoffgehalt von 30 Gew.-% unter Rühren zugemischt. Um den Feststoffgehalt auf 15 Gew.-% einzustellen wird die Suspension mit 78.6 g Ethanol verdünnt.

### Beispiel 11:

### Herstellung der BN/ MTKS-PT; BN : SiO₂ = 1 :1

50 g MTKS-PT R_{OR} 0,4 wird mit 2.5 g VE-Wasser aktiviert und 1 h gerührt. Danach wird der Binder mit 50 g der ethanolischen BN-Suspension aus Beispiel 7 mit einem Feststoffgehalt von 30 Gew.-% unter Rühren zugemischt. Der Feststoffgehalt der Schlichte (bezogen auf BN) beträgt 30 Gew.-%, er kann durch Zugabe von 100 g wasserfreiem Ethanol auf 15 Gew.-% abgesenkt werden.

### Herstellung der Al₂O₃/ZrO₂-Bindephase:

### Beispiel 12:

### nAnZ-Binder (1:1)

Zur Herstellung der Bindephase werden zunächst 100 g Böhmit (Disperal; Fa. Sasol, Hamburg) in 900 g Wasser eingerührt, dabei wird durch sukzessive Zugabe von Essigsäure ein konstanter pH-Wert von 3 eingestellt. Die Suspension wurde 24 h gerührt und die groben Agglomerate anschließend durch Sedimentation (48 h) abgetrennt. 11.6 g eines nanodispersen, Y-stabilisierten, oberflächenmodifizierten ZrO₂ Pulvers (INM: IZC4, spezifische Oberflächen von 200 g/cm³, 16 Gew.-% Trioxadekansäure) werden in 128.37 g des Boehmitsols (entsprechend 10 g Al₂O₃) eingerührt und durch Ultraschallbehandlung (Branson Sonifier) für die Dauer von 30 Minuten dispergiert.

### Beispiel 13:

### nAZ-Binder (1:1)

Zur Herstellung eines ZrO₂-Sols werden 36.86 g Zr-n-Propoxid in Propanol (70 Gew.-%) zusammen mit 16,89 g Essigsäure und 40.5 g deionisiertem Wasser vermischt und für 24 h gerührt (molares Verhältnis: 1:2.5:20). 9.425 g dieses Soles entsprechen 1 g ZrO₂. 28.57 g des Böhmitsols aus Beispiel 12(entsprechen 2 g Al₂O₃) und 18.85g des ZrO₂-Sols (entsprechen 2 g ZrO₂) werden vermischt und für 24 h gerührt.

### Herstellung von Al2O3/ZrO₂ gebundenen BN-Schichten:

### Beispiel 14:

### Herstellung einer wässrigen BN-Suspension

1 kg BN-Pulver (BN E1, Wacker-Chemie GmbH, München) mit einer spezifischen Oberfläche, gemessen nach der BET-Methode, von ca. 12 m²/g und einer Reinheit von 99,0% werden in 1950 g deionisiertem Wasser, in welchem 50 g Polyvinylpyrrolidon (PVP K-30, Hoechst AG, Frankfurt) gelöst ist, eingerührt. Die Suspension wird in einen kühlbaren Rührbehälter gefüllt und mit einem hochtourigen Rotor-Stator-Kreiselhomogenisator (Cavitron CD 1010) für die Dauer von 30 min dispergiert. Die erhaltene Suspension wird durch Zugabe von 2 kg VE-H₂O auf einen Feststoffgehalt von 20 Gew.-% verdünnt.

### Beispiel 15:

1 kg BN-Pulver (BN E1, Wacker-Chemie GmbH, München) mit einer spezifischen Oberfläche, gemessen nach der BET-Methode, von ca. 12 m²/g und einer Reinheit von 99,0% werden in 1975 g deionisiertem Wasser, in welchem 25 g Polyvinylalkohol (PVA 4/88; Hoechst AG, Frankfurt) gelöst ist, eingerührt. Die Suspension wird in einen kühlbaren Rührbehälter gefüllt und mit einem hochtourigen Rotor-Stator-Kreiselhomogenisator (Cavitron CD 1010) für die Dauer von 30 min dispergiert. Die erhaltene Suspension wird durch Zugabe von 2 kg VE-H₂O auf einen Feststoffgehalt von 20 Gew.-% verdünnt.

### Beispiel 16:

### Herstellung einer BnAnZ-Schlichte (2:1:1)

Zur Herstellung der Schlichte werden 30 g der wässrigen BN-Suspension aus Beispiel 14, alternativ aus Beispiel 15, (entsprechend 6 g BN) tropfenweise zu 41,99 g des obigen nAnZ-Bindephase zugegeben. Zur besseren Verabreitung kann durch Zugabe von wässrigem Ammoniak ein pH-Wert im Bereich von 4 - 6 eingestellt werden. Die so erhaltene Schlichte kann mittels gängiger Beschichtungsverfahren auf den Substraten appliziert werden. Nach der Trocknung kann die Formtrennschicht thermisch verdichtet/ausgehärtet werden.

### Beispiel 17:

### Herstellung einer BAnAnZ-Schlichte

In einem ersten Schritt werden 80 g Al₂O₃ (TM-DAR, Fa. TAI MEI) in 318 g H₂O und 2 g Essigsäure in einer Attritormühle (PE 075 Fa. Netzsch) mit 330 g Mahlkugeln (Al₂O₃; 4 - 5mm Durchmesser) in einem PE-Mahlbecher (+ Rotor) für die Dauer von 2 h bei 700 Umdrehungen/min dispergiert. Zur Herstellung der Schlichte werden zunächst 35 g der obigen Korund-Suspension (entsprechen: 7 g Al₂O₃) tropfenweise zu 70 g des nAnZ-Binder-Sols gegeben. Zu dieser Mischung wird unter rühren 15 g der wässriger BN-Suspension aus Beispiel 14, alternativ aus Beispiel 15, (entsprechend 3 g BN ) zugegeben. Zur besseren Verabreitung kann durch Zugabe von wässrigem Ammoniak ein pH-Wert im Bereich von ca. 4 - 6 eingestellt werden, anschließend kann die Schlichte zur Beschichtung mittels Rakeln, Gießen oder Sprühen verwendet werden.

### Beispiel 18:

### Herstellung eine BnAZ-Schlichte

28.57 g Böhmit-Sol (entsprechen 2 g Al₂O₃) werden in 18.85 g des ZrO₂-Sol eingerührt. Zu dieser Mischung werden 30 g BN-Suspension aus Beispiel 14, alternativ aus Beispiel 15, (entsprechen 6 g BN) unter rühren zugegeben Durch Zugabe von wässrigem Ammoniak wird ein pH-Wert im Bereich von ca. 4-5 eingestellt, anschließend kann die Schlichte zur Beschichtung mittels Rakeln, Gießen oder Sprühen verwendet werden.

## Patentansprüche

1. Schlichte zur Herstellung einer langzeitstabilen Formtrennschicht enthaltend
A) einen anorganischen Binder, der kolloidale anorganische Partikel auf Basis von Silicium-, Zirkonium- oder Aluminumoxid oder Böhmit oder deren Gemische, zusätzliche anorganische Füllstoffe ausgewählt aus der Gruppe enthaltend SiO₂, TiO₂, ZrO₂, Al₂O₃, AlOOH, Y₂O₃, CeO₂, SnO₂, Eisenoxiden und Kohlenstoff sowie gegebenenfalls weitere Zusatzstoffe enthält, wobei
i) im Falle eines kolloidale anorganische Partikel auf Basis von Siliciumoxid enthaltenden Binders dieser weiterhin ein oder mehrere Silane der allgemeinen Formel (1):
**Rₓ-Si-A₄₋ₓ** (1)
worin
A jeweils unabhängig voneinander hydrolytisch abspaltbare Gruppen ausgewählt aus der Gruppe enthaltend Wasserstoff, Halogene, Hydroxylgruppen und substituierten oder unsubstituierten Alkoxoy- mit 2 bis 20 Kohlenstoffatomen, Aryloxy- mit 6 bis 22 Kohlenstoffatomen, Alkylaryoxy-, Acyloxy- und Alkylcarbonylgruppen,
R jeweils unabhängig voneinander hydrolytisch nicht abspaltbare Gruppen ausgewählt aus der Gruppe enthaltend Alkyl- mit 1 bis 20 Kohlenstoffatomen, Alkenyl- mit 2 bis 20 Kohlenstoffatomen, Alkinyl- - mit 2 bis 20 Kohlenstoffatomen, Aryl- mit 6 bis 22 Kohlenstoffatomen, Alkaryl- und Arylalkylgruppen,
x den Wert 0, 1, 2, 3 mit der Maßgabe, dass bei mindestens 50% der Stoffmenge der Silane x ≥ 1 ist,
bedeuten, und
unterstöchiometrische Mengen Wasser, bezogen auf die hydrolysierbaren Gruppen der Silankomponente und
gegebenenfalls ein organisches Lösemittel
oder
ii) im Falle eines an kolloidalen anorganischen Partikeln auf Basis von Siliciumoxid freien Binders dieser weiterhin Wasser als Lösemittel
enthält und unter den Bedingungen des Sol-Gel-Prozesses gegebenenfalls unter Hydrolyse und Kondensation ein Nanokompositsol ausbildet,
B) eine Suspension von Bornitrid-Partikeln in dem organischen Lösemittel für den Fall, dass der Binder (i) verwendet wird, oder in Wasser für den Fall, dass der Binder (ii) verwendet wird, und
C) ein organisches Lösemittel für den Fall, dass der Binder (i) verwendet wird, oder Wasser für den Fall, dass der Binder (ii) verwendet wird.

2. Schlichte nach Anspruch 1, **dadurch gekennzeichnet, das**s der Suspension von Bornitrid-Partikeln Polyvinylbutyral oder eine Polyacrylsäure für den Fall, dass der Binder (i) verwendet wird, oder ein Polyvinylalkohol oder Polyvinylpyrrolidon für den Fall, dass der Binder (ii) verwendet wird, zugesetzt wird.

3. Schlichte nach Anspruch 1 oder 2, **dadurch gekennzeichnet, dass** sie einen pH-Wert von 3 bis 4 aufweist.

4. Schlichte nach mindestens einem der Ansprüche 1 bis 3, **dadurch gekennzeichnet, dass** das Bornitrid einen Partikeldurchmesser kleiner 10 µm und größer 1 µm aufweist.

5. Schlichte nach mindestens einem der Ansprüche 1 bis 4, **dadurch gekennzeichnet, dass** das Bornitrid eine hexagonale, grafitartige Kristallstruktur aufweist.

6. Schlichte nach mindestens einem der Ansprüche 1 bis 5, **dadurch gekennzeichnet, dass** das Bornitrid eine nach der BET-Methode gemessene spezifische Oberfläche von 1 bis 100 m²/g aufweist.

7. Schlichte nach mindestens einem der Ansprüche 1 bis 6, **dadurch gekennzeichnet, dass** das Bornitrid eine Reinheit von mindestens 98% aufweist.

8. Schlichte nach mindestens einem der Ansprüche 1 bis 7, **dadurch gekennzeichnet, dass** das Bornitrid in der Schlichte deagglomeriert vorliegt.

9. Schlichte nach mindestens einem der Ansprüche 1 bis 8, **dadurch gekennzeichnet, dass** die zusätzlichen anorganischen Füllstoffe Nanopartikel, welche vorzugsweise einen Teilchendurchmesser von kleiner 300 nm, bevorzugt kleiner 100 nm und besonders bevorzugt kleiner 50 nm aufweisen, von Silicium- oder Zirkoniumoxide oder Böhmit oder Gemische derselben sind.

10. Schlichte nach mindestens einem der Ansprüche 1 bis 9, **dadurch gekennzeichnet, dass** Methyltriethoxysilan, Tetraethoxysilan oder Phenyltriethoxysilan oder deren Gemische als Silane verwendet werden.

11. Schlichte nach mindestens einem der Ansprüche 1 bis 10, **dadurch gekennzeichnet, dass** die zur Hydrolyse und Kondensation eingesetzte Wassermenge 0,1 bis 0,9 Mol Wasser pro Mol der vorhandenen hydrolisierbaren Gruppen beträgt.

12. Schlichte nach mindestens einem der Ansprüche 1 bis 9, **dadurch gekennzeichnet, dass** als Ausgangsverbindungen der Zirkonkomponenten für die kolloidal anorganischen Partikel ein oder mehrere Zirkonoxidprekusoren der Substanzklassen Zirkonalkoxide, Zirkonsalze oder komplexierten Zirkonverbindungen oder kolloidale ZrO₂-Partikel, welche unstabilisiert oder stabilisiert sein können, verwendet werden.

13. Schlichte nach mindestens einem der Ansprüche 1 bis 9 oder 12, **dadurch gekennzeichnet, dass** als Ausgangsverbindungen der Aluminiumkomponenten für die kolloidal anorganischen Partikel Aluminiumsalze, Aluminiumalkoxide, nanoskalige Al₂O₃- oder AlOOH-Partikel in Form von Solen oder Pulvern verwendet werden.

14. Verfahren zur Herstellung einer Schlichte nach mindestens einem der Ansprüche 1 bis 13, **dadurch gekennzeichnet dass** Bornitrid in dem Lösungsmittel in einer Dispergiervorrichtung dispergiert und mit dem anorganischen Binder vermischt wird.

15. Verfahren nach Anspruch 14, **dadurch gekennzeichnet, dass** dem anorganischen Binder Polyvinylbutyral oder eine Polyacrylsäure für den Fall, dass der Binder (i) verwendet wird, oder ein Polyvinylalkohol oder Poylvinylpyrrolidon für den Fall, dass der Binder (ii) verwendet wird, zugesetzt wird.

16. Verfahren nach Anspruch 14 oder 15, **dadurch gekennzeichnet, dass** als Dispergiervorrichtung ein Ultra Turrax oder Hochleistungs-Kreiselhomogenisator verwendet wird.

17. Verfahren nach mindestens einem der Ansprüche 14 bis 16, **dadurch gekennzeichnet, dass** die Schlichte einen pH-Wert von 3 bis 4 aufweist.

18. Langzeitstabile Formtrennschich, **dadurch gekennzeichnet, dass** sie aus einer Schlichte gemäß mindestens einem der Ansprüche 1 bis 13 durch thermische Aushärtung bei Temperaturen über 300°C erhältlich ist, und dass die Schichtdicke der ausgehärteten Formtrennschicht 0,5 bis 250 µm aufweist.

19. Formtrennschicht nach Anspruch 18, **dadurch gekennzeichnet, dass** die Temperatur zur thermischen Anbindung oder Verdichtung der Formtrennschicht kleiner 600°C ist.

20. Formtrennschicht nach Anspruch 18, **dadurch gekennzeichnet, dass** die Formtrennschicht durch die Metallschmelze in situ erhalten wird.

21. Formtrennschicht nach mindestens einem der Ansprüche 18 bis 20, **dadurch gekennzeichnet, dass** der BN-Gehalt der ausgehärteten Formtrennschicht 20 bis 80 Gew.-% beträgt.

22. Verfahren zur Herstellung einer langzeitstabilen Formtrennschicht nach mindestens einem der Ansprüche 18 bis 21, **dadurch gekennzeichnet, dass** die Schlichte nach mindestens einem der Ansprüche 1 bis 11 zu einer fest haftenden Schicht auf Metall- oder anorganische Nichtmetalloberflächen aufgetragen und bei Temperaturen über 300°C thermisch ausgehärtet wird.

23. Verfahren nach Anspruch 22, **dadurch gekennzeichnet, dass** die Metall- oder anorganische Nichtmetalloberflächen Eisen, Chrom, Kupfer, Nickel, Aluminium, Titan, Zinn und Zink und deren Legierungen, Gusseisen, Stahlguss, Stähle, Bronzen, Messing, Keramiken, Feuerfestmaterialien und Gläser in Form von Folien, Geweben, Blechen, Platten oder Formstücken sind.

24. Verfahren nach Anspruch 22 oder 23, **dadurch gekennzeichnet, dass** die Schlichte durch Rakeln, Tauchen, Fluten, Schleudern, Sprühen, Bürsten und Streichen auf den die Metall- oder anorganische Nichtmetalloberflächen aufgetragen wird.

## Claims

1. A size for producing a mold release layer with long-term stability, comprising
A) an inorganic binder which comprises colloidal inorganic particles based on silicon oxide, zirconium oxide or aluminum oxide or boehmite or mixtures thereof, additional inorganic fillers selected from the group comprising SiO₂, TiO₂, ZrO₂, Al₂O₃, AlOOH, Y₂O₃, CeO₂, SnO₂, iron oxides and carbon, and also optionally further additives, where
i) in the case of a binder comprising colloidal inorganic particles based on silicon oxide, the binder further comprises one or more silanes of the general formula (1):
**Rₓ-Si-A₄₋ₓ** (1)
in which
A are each independently hydrolytically eliminable groups selected from the group comprising hydrogen, halogens, hydroxyl groups and substituted or unsubstituted alkoxy groups having from 2 to 20 carbon atoms, aryloxy groups having from 6 to 22 carbon atoms, alkylaryloxy, acyloxy and alkylcarbonyl groups,
R are each independently hydrolytically non-eliminable groups selected from the group comprising alkyl groups having from 1 to 20 carbon atoms, alkenyl groups having from 2 to 20 carbon atoms, alkynyl groups having from 2 to 20 carbon atoms, aryl groups having from 6 to 22 carbon atoms, alkaryl and arylalkyl groups,
x is 0, 1, 2, 3, with the proviso that x ≥ 1 for at least 50% of the amount of silanes,
and
substoichiometric amounts of water based on the hydrolyzable groups of the silane component and
optionally an organic solvent
or
ii) in the case of a binder free of colloidal inorganic particles based on silicon oxide, the binder further comprises water as a solvent
and, under the conditions of the sol-gel process, if appropriate with hydrolysis and condensation, forms a nanocomposite sol,
B) a suspension of boron nitride particles in the organic solvent in the case that the binder (i) is used, or in water in the case that the binder (ii) is used,
and
C) an organic solvent in the case that the binder (i) is used, or water in the case that the binder (ii) is used.

2. The size as claimed in claim 1, **characterized in that** polyvinyl butyral or a polyacrylic acid is added to the suspension of boron nitride particles in the case that the binder (i) is used, or a polyvinyl alcohol or polyvinylpyrrolidone is added to the suspension in the case that the binder (ii) is used.

3. The size as claimed in claim 1 or 2, **characterized in that** it has a pH of from 3 to 4.

4. The size as claimed in at least one of claims 1 to 3, **characterized in that** the boron nitride has a particle diameter less than 10 µm and greater than 1 µm.

5. The size as claimed in at least one of claims 1 to 4, **characterized in that** the boron nitride has a hexagonal, graphite-like crystal structure.

6. The size as claimed in at least one of claims 1 to 5, **characterized in that** the boron nitride has a specific surface area measured by the BET method of from 1 to 100 m²/g.

7. The size as claimed in at least one of claims 1 to 6, **characterized in that** the boron nitride has a purity of at least 98%.

8. The size as claimed in at least one of claims 1 to 7, **characterized in that** the boron nitride is present in the size in deagglomerated form.

9. The size as claimed in at least one of claims 1 to 8, **characterized in that** the additional inorganic fillers are nanoparticles which preferably have a particle diameter of less than 300 nm, preferably less than 100 nm and more preferably less than 50 nm, and are of silicon oxides or zirconium oxides or boehmite or mixtures thereof.

10. The size as claimed in at least one of claims 1 to 9, **characterized in that** the silanes used are methyltriethoxysilane, tetraethoxysilane or phenyltriethoxysilane or mixtures thereof.

11. The size as claimed in at least one of claims 1 to 10, **characterized in that** the amount of water used for hydrolysis and condensation is from 0.1 to 0.9 mol of water per mole of hydrolyzable groups present.

12. The size as claimed in at least one of claims 1 to 9, **characterized in that** the starting compounds used for the zirconium components for the colloidal inorganic particles are one or more zirconium oxide precursors of the substance classes of zirconium alkoxides, zirconium salts or complexed zirconium compounds or colloidal ZrO₂ particles which may be unstabilized or stabilized.

13. The size as claimed in at least one of claims 1 to 9 or 12, **characterized in that** the starting compounds used for the aluminum components for the colloidal inorganic particles are aluminum salts, aluminum alkoxides, nanoscale Al₂O₃ or AlOOH particles in the form of sols or powders.

14. A process for producing a size as claimed in at least one of claims 1 to 13, **characterized in that** boron nitride is dispersed in the solvent in a dispersion apparatus and mixed with the inorganic binder.

15. The process as claimed in claim 14, **characterized in that** polyvinyl butyral or a polyacrylic acid is added to the inorganic binder in the case that the binder (i) is used, or a polyvinyl alcohol or polyvinylpyrrolidone is added to the inorganic binder in the case that the binder (ii) is used.

16. The process as claimed in claim 14 or 15, **characterized in that** the dispersion apparatus used is an Ultra-Turrax or high-performance centrifugal homogenizer.

17. The process as claimed in at least one of claims 14 to 16, **characterized in that** the size has a pH of from 3 to 4.

18. A mold release layer with long-term stability, **characterized in that** it is obtainable from a size as claimed in at least one of claims 1 to 13 by thermal curing at temperatures above 300°C, and that the layer thickness of the cured mold release layer has from 0.5 to 250 µm.

19. The mold release layer as claimed in claim 18, **characterized in that** the temperature for thermally attaching or compacting the mold release layer is less than 600°C.

20. The mold release layer as claimed in claim 18, **characterized in that** the mold release layer is obtained in situ by virtue of the metal melt.

21. The mold release layer as claimed in at least one of claims 18 to 20, **characterized in that** the BN content of the cured mold release layer is from 20 to 80% by weight.

22. A process for producing a mold release layer with long-term stability as claimed in at least one of claims 18 to 21, **characterized in that** the size as claimed in at least one of claims 1 to 11 is applied to a firmly adhering layer on metal or inorganic nonmetal surfaces and thermally cured at temperatures above 300°C.

23. The process as claimed in claim 22, **characterized in that** the metal or inorganic nonmetal surfaces are iron, chromium, copper, nickel, aluminum, titanium, tin and zinc and alloys thereof, cast iron, cast steel, steels, bronzes, brass, ceramics, refractory materials and glasses in the form of films, fabrics, sheets, plaques or moldings.

24. The process as claimed in claim 22 or 23, **characterized in that** the size is applied to the metal or inorganic nonmetal surfaces by knife-coating, dipping, flow-coating, spin-coating, spraying, brushing and spreading.

## Revendications

1. Enduit destiné à la production d'une couche de démoulage stable pendant une longue durée, contenant
A) un liant inorganique qui contient des particules inorganiques colloïdales à base d'oxyde de silicium, de zirconium ou d'oxyde d'aluminium ou de boehmite ou de mélanges de ceux-ci, des charges inorganiques supplémentaires choisies dans le groupe comportant SiO₂, TiO₂, ZrO₂, Al₂O₃, AlOOH, Y₂O₃, CeO₂, SnO₂, des oxydes de fer et du carbone, ainsi qu'éventuellement d'autres additifs,
i) dans le cas d'un liant contenant des particules inorganiques colloïdales à base d'oxyde de silicium, celui-ci contenant en outre un ou plusieurs silanes de formule générale (1) :
Rₓ-Si-A₄₋ₓ (1)
dans laquelle
A représentent chacun, indépendamment les uns des autres, des groupes séparables par hydrolyse, choisis dans l'ensemble comportant un atome d'hydrogène, des halogènes, des groupes hydroxy et des groupes alcoxy substitués ou non substitués ayant de 2 à 20 atomes de carbone, aryloxy ayant de 6 à 22 atomes de carbone, alkylaryloxy, acyloxy et alkylcarbonyle,
R représentent chacun, indépendamment les uns des autres, des groupes non séparables par hydrolyse, choisis dans l'ensemble comportant des groupes alkyle ayant de 1 à 20 atomes de carbone, alcényle ayant de 2 à 20 atomes de carbone, alcynyle ayant de 2 à 20 atomes de carbone, aryle ayant de 6 à 22 atomes de carbone, alkaryle et arylalkyle,
x a la valeur 0, 1, 2, 3, étant entendu que dans au moins 50 % de la quantité de matière des silanes x est ≥ 1,
et
des quantités inférieures à la quantité stoechiométrique d'eau, par rapport aux groupes hydrolysables du composant silane et
éventuellement un solvant organique
ou
ii) dans le cas d'un liant exempt de particules inorganiques colloïdales à base d'oxyde de silicium, celui-ci contient en outre de l'eau en tant que solvant,
et dans les conditions du processus sol-gel, éventuellement avec hydrolyse et condensation, il se forme un sol de nanocomposite,
B) une suspension de particules de nitrure de bore dans le solvant organique, dans le cas où le liant (i) est utilisé, ou dans de l'eau, dans le cas où le liant (ii) est utilisé,
et
C) un solvant organique dans le cas où le liant (i) est utilisé, ou de l'eau dans le cas où le liant (ii) est utilisé.

2. Enduit selon la revendication 1, **caractérisé en ce qu'**on ajoute à la suspension de particules de nitrure de bore du polyvinylbutyral ou un poly(acide acrylique) dans le cas où le liant (i) est utilisé, ou un poly(alcool vinylique) ou de la polyvinylpyrrolidone dans le cas où le liant (ii) est utilisé.

3. Enduit selon la revendication 1 ou 2, **caractérisé en ce qu'**il présente un pH de 3 à 4.

4. Enduit selon au moins l'une des revendications 1 à 3, **caractérisé en ce que** le nitrure de bore a un diamètre de particule inférieur à 10 µm et supérieur à 1 µm.

5. Enduit selon au moins l'une des revendications 1 à 4, **caractérisé en ce que** le nitrure de bore a une structure cristalline hexagonale de type graphite.

6. Enduit selon au moins l'une des revendications 1 à 5, **caractérisé en ce que** le nitrure de bore présente une surface spécifique, mesurée selon la méthode BET, de 1 à 100 m_/g.

7. Enduit selon au moins l'une des revendications 1 à 6, **caractérisé en ce que** le nitrure de bore a un degré de pureté d'au moins 98 %.

8. Enduit selon au moins l'une des revendications 1 à 7, **caractérisé en ce que** le nitrure de bore dans l'enduit est présent sous forme désagglomérée.

9. Enduit selon au moins l'une des revendications 1 à 8, **caractérisé en ce que** les charges inorganiques supplémentaires comportent des nanoparticules qui ont de préférence un diamètre de particule inférieur à 300 nm, de préférence inférieur à 100 nm et de façon particulièrement préférée inférieur à 50 nm, d'oxydes de silicium ou d'oxydes de zirconium ou de boehmite ou de mélanges de ceux-ci.

10. Enduit selon au moins l'une des revendications 1 à 9 ou 12, **caractérisé en ce qu'**on utilise comme silanes du méthyltriéthoxysilane, du tétraéthoxysilane ou du phényltriéthoxysilane ou des mélanges de ceux-ci.

11. Enduit selon au moins l'une des revendications 1 à 10, **caractérisé en ce que** la quantité d'eau utilisée dans l'hydrolyse et la condensation est de 0,1 à 0,9 mole d'eau par mole des groupes hydrolysables présents.

12. Enduit selon au moins l'une des revendications 1 à 9, **caractérisé en ce qu'**on utilise comme composés de départ des composants contenant du zirconium pour les particules inorganiques colloïdales un ou plusieurs précurseurs d'oxyde de zirconium appartenant aux classes de substances alcoolates de zirconium, sels de zirconium ou composés complexés contenant du zirconium ou des particules de ZrO₂ colloïdales, qui peuvent être stabilisées ou non stabilisées.

13. Enduit selon au moins l'une des revendications 1 à 9, **caractérisé en ce qu'**on utilise comme composés de départ des composants contenant de l'aluminium pour les particules inorganiques colloïdales des sels d'aluminium, des alcoolates d'aluminium, des nanoparticules de Al₂O₃ ou AlOOH sous forme de sols ou de poudres.

14. Procédé pour la préparation d'un enduit selon au moins l'une des revendications 1 à 13, **caractérisé en ce que** le nitrure de bore est dispersé dans le solvant dans une appareil de dispersion et mélangé avec le liant inorganique.

15. Procédé selon la revendication 14, **caractérisé en ce qu'**on ajoute au liant inorganique du polyvinylbutyral ou un poly(acide acrylique) dans le cas où le liant (i) est utilisé, ou un poly(alcool vinylique) ou de la polyvinylpyrrolidone dans le cas où le liant (ii) est utilisé.

16. Procédé selon la revendication 14 ou 15, **caractérisé en ce qu'**on utilise comme appareil de dispersion un homogénéisateur Ultra-Turrax ou un homogénéisateur rapide de type toupie à haute puissance.

17. Procédé selon au moins l'une des revendications 14 à 16, **caractérisé en ce que** l'enduit a un pH de 3 à 4.

18. Couche de démoulage stable pendant une longue durée, **caractérisée en ce qu'**elle peut être obtenue par durcissement thermique à des températures supérieures à 300 °C à partir d'un enduit selon au moins l'une des revendications 1 à 13, et **en ce que** l'épaisseur de la couche de démoulage durcie va de 0,5 à 250 µm.

19. Couche de démoulage selon la revendication 18, **caractérisée en ce que** la température dans la liaison ou le compactage thermique de la couche de démoulage est inférieure à 600 °C.

20. Couche de démoulage selon la revendication 18, **caractérisée en ce que** la couche de démoulage est obtenue in situ sous l'effet du métal en fusion.

21. Couche de démoulage selon au moins l'une des revendications 18 à 20, **caractérisée en ce que** la teneur en BN de la couche de démoulage durcie va de 20 à 80 % en poids.

22. Procédé pour la production d'une couche de démoulage stable pendant une longue durée, selon au moins l'une des revendications 18 à 21, **caractérisé en ce que** l'enduit selon au moins l'une des revendications 1 à 11 est appliqué en une couche adhérant solidement sur des surfaces métalliques ou non métalliques inorganiques et durci thermiquement à des températures supérieures à 300 °C.

23. Procédé selon la revendication 22, **caractérisé en ce que** les surfaces métalliques ou non métalliques inorganiques consistent en fer, chrome, cuivre, nickel, aluminium, titane, étain et zinc, et leurs alliages, fonte, acier moulé, aciers, bronzes, laiton, céramiques, matériaux réfractaires et verres, sous forme de feuilles, de toiles, de tôles, de plaques ou de pièces moulées.

24. Procédé selon la revendication 22 ou 23, **caractérisé en ce que** l'enduit est appliqué sur les surfaces métalliques ou non métalliques inorganiques par enduction à la racle, trempage, enduction par ruissellement, enduction par projection centrifuge, pulvérisation, enduction à la brosse et enduction au pinceau.
